# EUROPEAN PATENT APPLICATION

(11) **EP 2 390 753 A2**
(43) Date of publication of application: **30.11.2011**
(21) Application number: 11167617.7
(22) Date of filing: 26.05.2011
(51) Int. Cl.: G06F 1/18, G06F 1/20, G06F 1/26

(54) **Power supply device with interactive display control**

(30) Priority: 28.05.2010 TW 099210185
(71) Applicant: Golden Emperor International, Ltd., New Tapei City 235 (TW)
(72) Inventor: Chang, Po, New Taipei City 235 (TW)
(74) Representative: Viering, Jentschura & Partner

(57) **Abstract**

A power supply device enabling an interactive display control that can transfer the electricity data (D1), the rotation speed data (D2) and the temperature data (D3) generated by the power supply (1) to an interactive display module (22) is disclosed. In addition, the interactive display module (22) may implement prompt adjustment to output voltage and fan rotation speed in the power supply (1) by minimal human operations.

## Description

### BACKGROUND OF THE INVENTION

### 1. Field of the Invention

The present invention relates to a power supply device; in particular, it relates to a power supply device enabling interactive display control that can show in real-time power condition, fan rotation speed condition and temperature condition in use, and also adjust and compensate output voltage and fan rotation speed thereof.

### 2. Description of Related Art

A power supply is virtually an indispensible component for a computer system. Operating status of the power supply, however, is generally beyond the control of human operators. Taking the personal computer (PC) as an example, the power output conditions regarding the power supply installed therein can be reflected by the output values indicating various voltage rating (e.g. 3.3, 5 or 12 Volts) shown in the Basic Input/Output System (BIOS) for user's reference. However, the information provided by BIOS may not be obtained all the time.

Besides, most advanced motherboards are mostly provided with built-in monitoring mechanisms presenting information of the operating status of the power supply such as internal temperature, input power condition and fan rotation speed. Such information may not be accessible until after being intentionally accessed as, for example, it typically lies in the background of an interface of an operating system.

Consequently, information of occurrences of undesirable increase in the internal temperature and abnormal fan rotation speed of the power supply are not immediately available to the human operators before certain damages such as burn-down of the components have already been caused, shortening lifespan of the power supply and potentially increasing maintenance cost associated with the damaged power supply or the computer system having the power supply. ,

### SUMMARY OF THE INVENTION

Accordingly, the present invention provides a power supply device enabling an interactive display control that is capable of detecting operating status of the power supply. And the present invention also further provides a mechanism allowing for prompt fan rotation speed adjustment and output voltage compensation.

The power supply device enabling the interactive display control according to an embodiment of the present invention includes a detecting module, a signal converting circuit, a first communication driver, a second communication driver and an interactive display module. The detecting module outputs at least one analog signal. The signal converting circuit is coupled to the detecting module in order to convert the detection signal into a digital signal. The first communication driver is coupled to the signal converting circuit in order to compress the digital signal into a data packet. The second communication driver is coupled to the first communication driver and is configured in accordance with a first communication protocol on basis of which the first communication driver is configured as well. The second communication driver receives and decompresses the data packet. The interactive display module is coupled to the second communication driver in order to operate on the decompressed digital signal, and presents the display data.

### BRIEF DESCRIPTION OF THE DRAWINGS

Fig. 1 shows a perspective view of a power supply device according to an embodiment of the present invention;

Fig. 2 shows a circuit block diagram of the power supply device according to an embodiment of the present invention;

Fig. 3 shows another circuit block diagram of the power supply device according to an embodiment of the present invention;

Fig. 4 shows a circuit block diagram of the interactive display module according to an embodiment of the present invention; and

Fig. 5 shows a diagram of application status for the embodiment of the present invention.

### DETAILED DESCRIPTION OF THE PREFERRED EMBODIMENTS

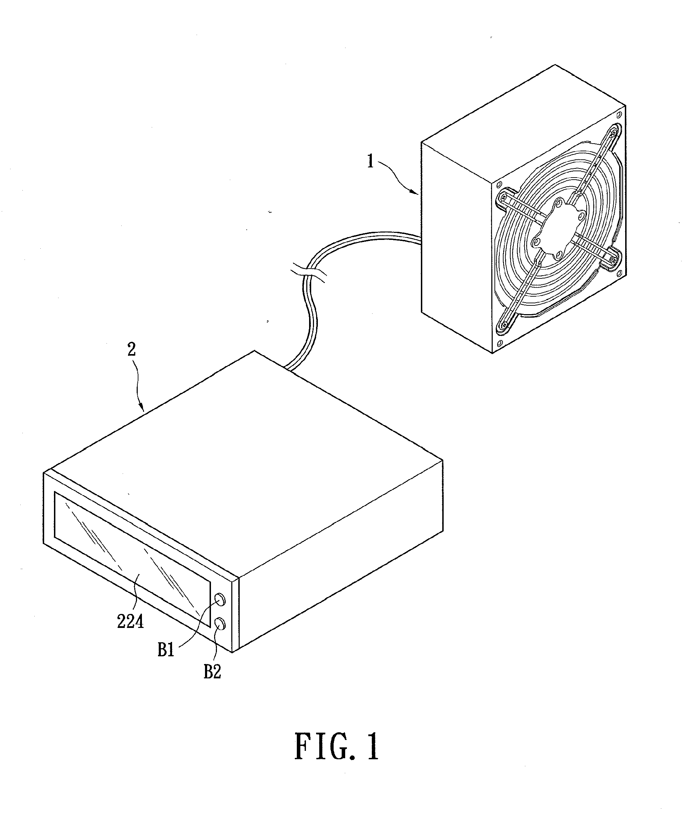

Refer now to Fig. 1, wherein a perspective view of a power supply device according to an embodiment of the present invention is shown. The power supply device according to the present embodiment includes a power supply 1 and an interactive display device 2 communicatively coupled to the power supply 1. Input units (B 1 and B2) that are installed on the interactive display device 2 may be manipulated to adjust fan rotation speed of the power supply 1 and compensate an output voltage of the power supply 1. In addition, the power supply 1 also compresses electricity data, rotation speed data or temperature data into a data packet before the data packet is delivered to the interactive display device 2 in order to be presented on a liquid crystal display (LCD) device 224 of the interactive display device 2.

The interactive display device 2 in the present invention is to provide an interactive operation interface so that the operational condition of the power supply such as the internal fan rotation speed of the power supply 1 may be controlled through the interactive display device 2. Meanwhile, compensating the output voltage from the power supply 1 may be implemented through the interactive display device 2 as well.

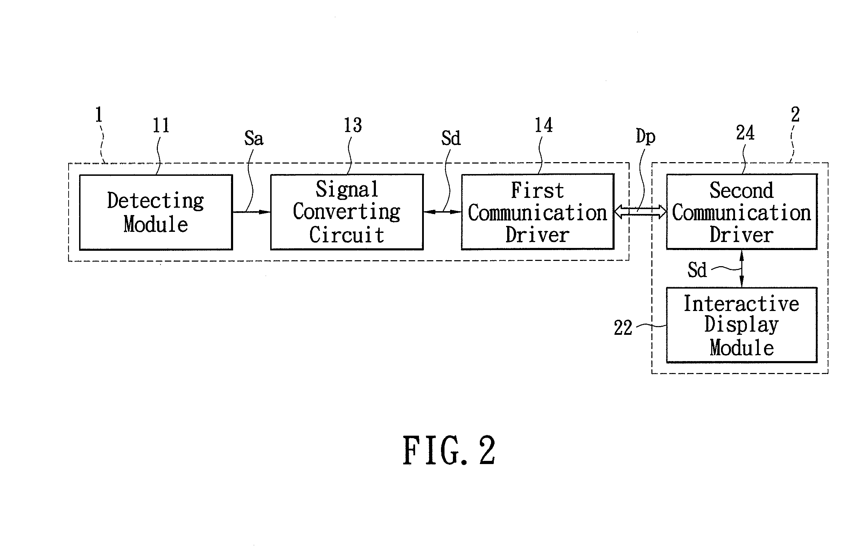

Refer to Fig. 2 in conjunction with Fig. 1. Fig. 2 shows a circuit block diagram of the power supply device according to an embodiment of the present invention. The power supply 1 in the present embodiment essentially includes a detecting module 11, a signal converting circuit 13, and a first communication driver 14. The interactive display device 2 generally includes a second communication driver 24 and an interactive display module 22. The detecting module 11 outputs at least one analog signal Sa to the signal converting circuit 13 where the detection signal Sa may be converted into a digital signal Sd. The digital signal Sd may be further transferred to the first communication driver 14.

The first communication driver 14 is configured to compress the digital signal Sd into a data packet Dp and send the data packet Dp to the second communication driver 24. It is worth noting that the second communication driver 24 is configured in accordance with a first communication protocol on basis of which the first communication driver 14 is configured. The second communication driver 24 decompresses the data packet Dp and passes the generated digital signal Sd to the interactive display module 22. The interactive display module 22 is configured to operate on the received digital signal Sd and present a display data (not shown) accordingly.

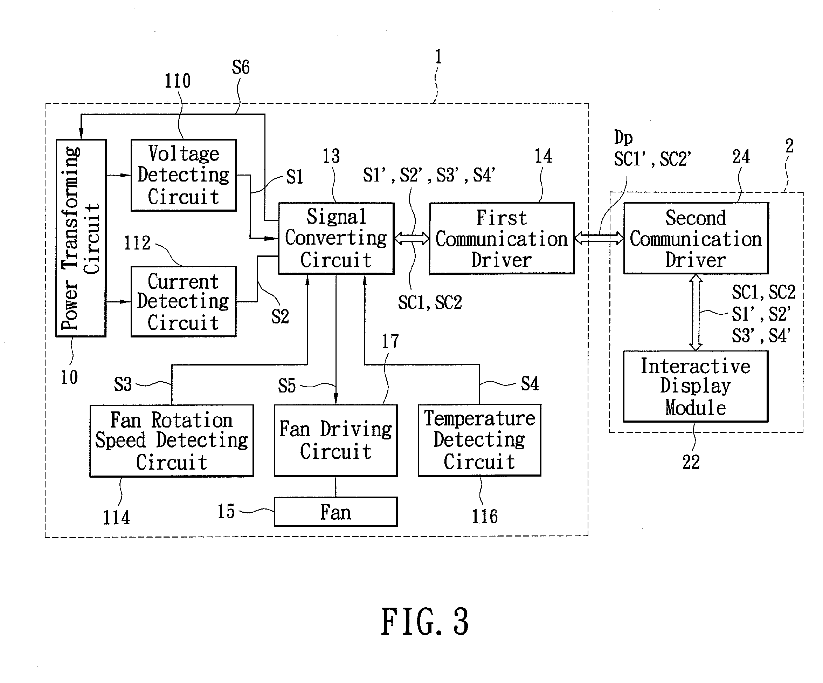

Refer to Fig. 3 in conjunction with Fig. 2. Fig. 3 shows another circuit block diagram of the power supply device according to an embodiment of the present invention. The detecting module 11 in the power supply 1 includes a voltage detecting circuit 110, a current detecting circuit 112, a fan rotation speed detecting circuit 114 and a temperature detecting circuit 116. Also, the power supply 1 further includes a power transforming circuit 10, a fan driving circuit 17 along with a fan 15.

Herein the voltage detecting circuit 110 and the current detecting circuit 112 are employed to detect an electricity supplied by the power transforming circuit 10 and generate a first analog signal S1 and a second analog signal S2. The fan rotation speed detecting circuit 114 detects the rotation speed of the fan 15 in the power supply 1 and accordingly outputs a rotation speed signal S3. The temperature detecting circuit 116 detects the temperature in the power supply 1 and thus outputs a temperature signal S4.

The signal converting circuit 13 is coupled to the voltage detecting circuit 110, the current detecting circuit 112, the fan rotation speed detecting circuit 114 and the temperature detecting circuit 116. The signal converting circuit 13 is configured to convert the first analog signal S1, the second analog signal S2, the rotation speed signal S3 and the temperature signal S4 into a first digital signal S1', a second digital signal S2', a digital rotation speed signal S3' and a digital temperature signal S4', respectively.

The first communication driver 14 is coupled to the signal converting circuit 13 in order to compress the first digital signal S1', the second digital signal S2', the digital rotation speed signal S3' and the digital temperature signal S4' into a data packet Dp. The data packet Dp is then delivered to the interactive display device 2 to be presented the interactive display device 2.

The second communication driver 24 is coupled to the first communication driver 14 and both of them are configured with the same communication protocol (e.g., the first communication protocol) for facilitating the reception of the data packet Dp. The first communication protocol may be USB, I2C, RS-232, RS-485, IEEE 1394 or Device Bay communication protocol specifications. Besides, the interactive display module 22 may be a touch screen display.

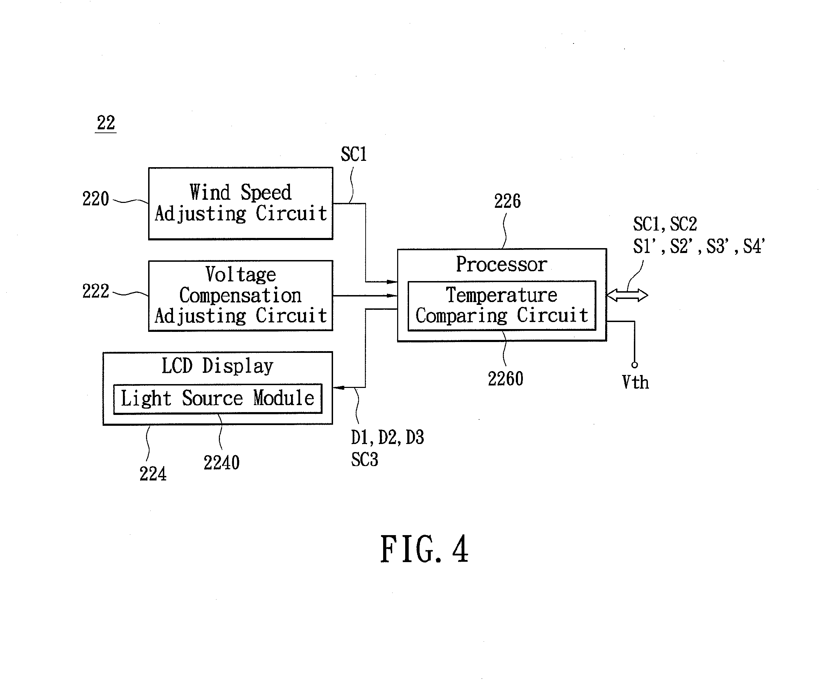

Refer to Fig. 4 in conjunction with Fig. 3. Fig. 4 shows a circuit block diagram of the interactive display module according to an embodiment of the present invention. The interactive display module 22 is coupled to the second communication driver 24 and may include a wind speed adjusting circuit 220, a voltage compensation adjusting circuit 222, an LCD device 224, and a processor 226. The second communication driver 24 receives and decompresses the data packet Dp, and transfers the decompressed first digital signal S1', the decompressed second digital signal S2', the decompressed digital rotation speed signal S3' and the decompressed digital temperature signal S4' to the processor 226.

The processor 226 operates on decompressed signals including the decompressed first digital signal S1', the decompressed second digital signal S2', the decompressed digital rotation speed signal S3' and the decompressed digital temperature signal S4' to generate electricity data D1, rotation speed data D2, and temperature data D3. The processor 226 then sends the electricity data D1, the rotation speed data D2, and the temperature data D3 to the LCD device 224 for presentation. In one implementation, the electricity data D 1 may be the voltage data, the current data, or the power data.

The input units (B 1 and B2) shown as Fig. 1, e.g., buttons knobs, may be utilized to cause the wind speed adjusting circuit 220 to output a first control signal SC1 to the processor 226, which may in turn send the first control signal SC1 to the second communication driver 24 for compression. And the second communication driver 24 then transmits the compressed first control signal SC1' to the first communication driver 14. Upon reception of the first control signal SC1', the first communication driver 14 decompresses the first control signal SC1' and transfers the decompressed first control signal SC 1 to the signal converting circuit 13. The signal converting circuit 13 converts the first control signal SC1 into a first analog control signal S5 which is then transferred to the fan driving circuit 17 for the control of the rotation speed of the fan 15. As such, the rotation speed of the fan 15 in the power supply 1 may be adjusted and immediately presented on the LCD device 224.

The input units (B 1 and B2) shown as Fig. 1 may be employed to cause the voltage compensation adjusting circuit 222 to output a second control signal SC2 to the processor 226, which in turn send the second control signal SC2 to the second communication driver 24. And the second communication driver 24 then passes the compressed second control signal SC2' to the first communication driver 14. Upon the reception of the second control signal SC2', the first communication driver 14 decompresses the second control signal SC2' and transfers the decompressed second control signal SC2 to the signal converting circuit 13. The signal converting circuit 13 converts the second control signal SC2 into a second analog control signal S6 which is then transferred to the power transforming circuit 10 for the control of the compensation of the output voltage by the power transforming circuit 10. Consequently, the output voltage from the power transforming circuit 10 in the power supply 1 may be adjusted to a desired level, and immediately shown on the LCD device 224.

Refer again to Fig. 4 in conjunction with Fig. 3. The LCD device 224 in the interactive display module 22 may further include a light source module 2240. In one implementation, the light source module 2240 may be an LED light source module used to provide at least one colored light, such as red light. Also, the processor 226 may further include a temperature comparing circuit 2260 for comparing the digital temperature signal S4' with a threshold signal Vth and outputting a light source control signal SC3 to the light source module 2240.

Hence, when the internal temperature of the power supply 1 reaches at a predetermined threshold temperature, the light source control signal SC3 from the processor 226 controls the light source 2240 to emit the colored light indicating an occurrence of an overly high temperature. In addition, in the event that the internal temperature of the power supply 1 is under normal condition, the light source control signal SC3 from the processor 226 may control the light source 2240 to emit another colored light indicative of the normal internal temperature.

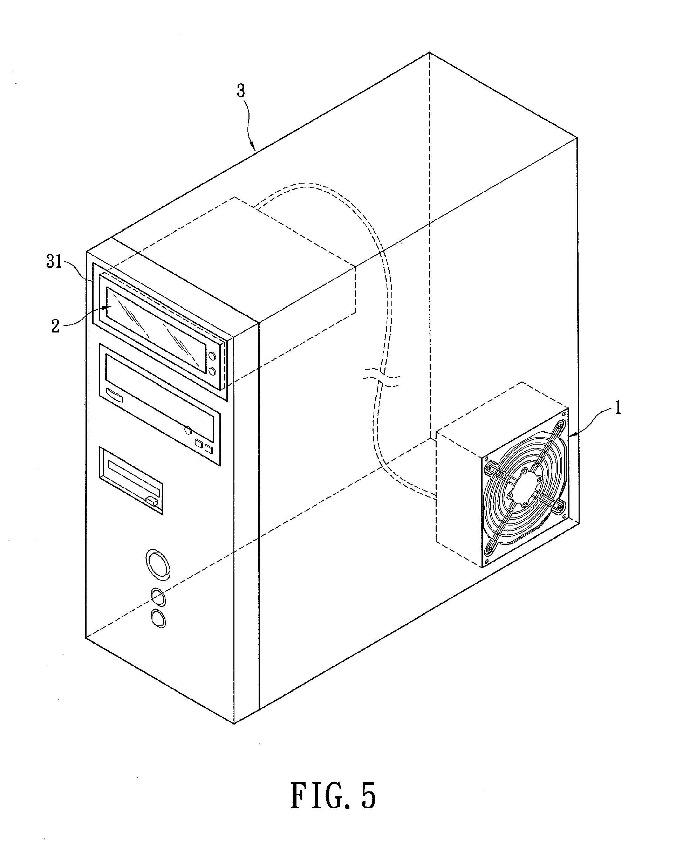

Since the interactive display device 2 may be externally connected with the power supply 1, the interactive display device 2 may be installed in an expansion slot 31 on a front panel of the host computer 3, as shown in Fig. 5. Thus, as long as the system is powered, the interactive display device 2 may properly present operating status of the power supply 1 independent of operating status of the computer system.

In summary, the power supply 1 and the interactive display device 2 in the present embodiment utilize the same communication protocol to carry out data transmissions between them. More specifically, the power supply 1 sends the electricity data, the temperature data and the rotation speed data to the interactive display device 2 in accordance with the communication protocol that facilitates the communication between the power supply 1 and the interactive display device 2. Meanwhile, the interactive display device 2 may transfer the rotation speed control signal and the voltage compensation control signal to the power supply 1 through the same communication protocol as well.

Accordingly, from the interactive display device according to the present embodiment operating status of the power supply may be observed in a real-time manner, thereby eliminating the occurrences of component failure or burn-down as well as overly high or undesirable fluctuating input voltage and input current, thus resolving the undesired consequences such as shortened lifespan and increased costs in maintenance for internal components and peripherals. Besides, the rotation speed of fan and the output voltage may be adjusted by manipulating the interactive display module so as to achieve the objectives of enhancing heat dissipation and maintaining the temperature of the power supply device in a predetermined level.

It should be noted that the detailed descriptions and drawings set forth hereinbefore illustrate only the preferred embodiments of the present invention, and all variations and modifications that those skilled in the art can conveniently consider in the field of the present invention should therefore be encompassed by the following claims of the present invention.

## Claims

1. A power supply device enabling an interactive display control, comprising:
a detecting module (11), which outputs at least one analog signal (Sa);
a signal converting circuit (13), which is coupled to the detecting module (11) and converts the analog signal (Sa) into a digital signal (Sd);
a first communication driver (14), which is coupled to the signal converting circuit (13) and compresses the digital signal (Sd) into a data packet (Dp);
a second communication driver (24), which is coupled to the first communication driver (14) and is configured in accordance with a first communication protocol on basis of which the first communication driver (14) is configured as well, and receives and decompresses the data packet (Dp); and
an interactive display module (22) coupled to the second communication driver (24) for operating on the decompressed digital signal to present a display data.

2. The power supply device enabling the interactive display control according to Claim 1, further comprising a power transforming circuit (10) for providing an electric power.

3. The power supply device enabling the interactive display control according to Claim 2, wherein the detecting module (11) comprises:
a voltage detecting circuit (110), which is coupled to the power transforming circuit (10), and detects the electric power to generate a first analog signal (S1); and
a current detecting circuit (112) coupled to the power transforming circuit (10), for detecting the electric power to generate a second analog signal (S2).

4. The power supply device enabling the interactive display control according to Claim 3, wherein the detecting module (11) comprises:
a fan rotation speed detecting circuit (114), which is coupled to the signal converting circuit (13) and outputs a rotation speed signal (S3) to the signal converting circuit (13); and
a temperature detecting circuit (116), which is coupled to the signal converting circuit (13), for outputting a temperature signal (S4) to the signal converting circuit (13).

5. The power supply device enabling the interactive display control according to Claim 4, wherein the signal converting circuit (13) is coupled to the voltage detecting circuit (110), the current detecting circuit (112), the fan rotation speed detecting circuit (114) and the temperature detecting circuit (116) and converts the first analog signal (S1), the second analog signal (S2), the rotation speed signal (S3) and the temperature signal (S4) into a first digital signal (S1'), a second digital signal (S2'), a digital rotation speed signal (S3') and a digital temperature signal (S4'), respectively.

6. The power supply device enabling the interactive display control according to Claim 5, wherein the first communication driver (14) compresses the first digital signal (S1'), the second digital signal (S2'), the digital rotation speed signal (S3') and the digital temperature signal (S4') into the data packet (Dp).

7. The power supply device enabling the interactive display control according to Claim 6, wherein the interactive display module (22) comprises a processor (226) and an liquid crystal display (LCD) device (224), in which the processor (226) operates for generating the first digital signal (S1'), the second digital signal (S2'), the digital rotation speed signal (S3') and the digital temperature signal (S4') in order to prepare an electricity data (D1), a rotation speed data (D2) and a temperature data (D3) and passing the electricity data (D1), the rotation speed data (D2) and the temperature data (D3) to the LCD device (224) for presentation.

8. The power supply device enabling the interactive display control according to Claim 7, further comprising:
a fan driving circuit (17), which is coupled to the signal converting circuit (13) and a fan (15); and
a wind speed adjusting circuit (220), which is coupled to the processor (226) and outputs a first control signal (SC1) to the processor (226), in which the processor (226) sends the first control signal (SC1) to the second communication driver (24) for compression, which in turn transfers the compressed first control signal (SC1') to the fan driving circuit (17) through the first communication driver (14) and the signal converting circuit (13) thereby controlling the rotation speed of the fan (15).

9. The power supply device enabling the interactive display control according to Claim 8, further comprising a voltage compensation adjusting circuit (222) coupled to the processor (226) for outputting a second control signal (SC2) to the processor (226), which sends the second control signal (SC2) to the second communication driver (24) for compression and then the second communication driver (24) transfers the compressed second control signal (SC2') to the power transforming circuit (10) through the first communication driver (14) and the signal converting circuit (13) thereby controlling the power transforming circuit (10) to perform output voltage compensation.

10. The power supply device enabling the interactive display control according to Claim 1, wherein the first communication protocol is based on the USB, I2C, RS-232, RS-485, IEEE 1394 or Device Bay communication protocol specifications.

11. The power supply device enabling the interactive display control according to Claim 1, wherein the interactive display module (22) comprises a touch screen display.

12. The power supply device enabling the interactive display control according to Claim 7, wherein the electricity data D1 is a voltage data, a current data, or a power data.

13. The power supply device enabling the interactive display control according to Claim 8, wherein the wind speed adjusting circuit (220) outputs the first control signal (SC1) based on button activation or knob activation.

14. The power supply device enabling the interactive display control according to Claim 9, wherein the voltage compensation adjusting circuit (222) outputs the second control signal (SC2) based on button activation or knob activation.

15. The power supply device enabling the interactive display control according to Claim 1, wherein the LCD device 224 further comprises a light source module (2240) providing at least one colored light.

16. The power supply device enabling the interactive display control according to Claim 15, wherein the light source module (2240) is a (light emitting diode) LED light source module.

17. The power supply device enabling the interactive display control according to Claim 15, wherein the processor (226) further comprises a temperature comparing circuit (2260) which operates on the digital temperature signal (S4') and a threshold signal (Vth) and outputs a light source control signal (SC3) to the light source module (2240).
